Europäisches Patentamt

(19) European Patent Office

Office européen des brevets

(11) Publication number: **0 006 302**
A1

# (12) EUROPEAN PATENT APPLICATION

(21) Application number: 79300918.4

(22) Date of filing: 23.05.79

(51) Int. Cl.3: **B 60 K 17/10**, B 62 D 21/00

(30) Priority: 25.05.78 GB 2881478

(43) Date of publication of application: 09.01.80
Bulletin 80/1

(84) Designated Contracting States: BE CH DE FR IT LU NL
SE

(71) Applicant: NICKERSON TURFMASTER LIMITED,
Maldon, Essex (GB)

(72) Inventor: Lawrie, Robin Buchanan, Auldearn
Rosebank, By Carluke Lanarkshire (GB)
Inventor: Turnbull, John Rennie, 8 Albion Street,
Motherwell Lanarkshire (GB)

(74) Representative: Harrison, Philippa Dinah et al, A. A.
THORNTON & CO Northumberland House 303-306
High Holborn, London WC1V 7LE (GB)

(54) Vehicle with hydraulic drive means.

(57) A vehicle comprises a chassis (1) supported on at least three rotatable support members (2, 3, 4) and supporting hydraulic drive means (2a, 3a, 4a) for hydraulically driving at least one of the support members (2, 3, 4) and means (5) for producing a flow of hydraulic fluid under pressure.

To reduce the mass and complexity of the construction of the vehicle, the chassis (1) comprises tubular section members (7–12) which are internally connected to serve as the reservoir for hydraulic fluid and/or for the distribution of hydraulic fluid between the means (5) to the drive means (2a, 3a, 4a).

-1-

Improvements in and relating to Vehicles

The present invention relates to improvements in vehicles and particularly to a vehicle comprising a chassis supported on at least three rotatable support members, hydraulic drive means for hydraulically driving at least one of said support members, and means for producing a flow of hydraulic fluid under pressure.

In hydraulically driven vehicles, the pipework of the hydraulic circuit and the vessels for hydraulic fluid reservoirs are provided on a conventional chassis. This consequently substantially increases the mass of the vehicle and the complexity of its construction.

To reduce the mass and complexity and therefore the cost the invention proposes to make the chassis of tubular section members and to use these members as the pipework of the hydraulic circuit and/or as the vessel for the hydraulic reservoir.

According to one aspect of the invention the chassis comprises tubular section members which are internally connected together to serve for the distribution of hydraulic fluid between the or each hydraulic drive means and the means for producing a flow of hydraulic fluid under pressure.

According to another aspect of the invention the chassis comprises at least one tubular section member      which is internally connected to form a reservoir for hydraulic fluid.

It will be appreciated that the rotatable support members may for example be wheels or may be the driving rollers for endless belts on which the vehicle travels.

The chassis preferably comprises a pair of longitudinally extending tubular section members connected adjacent the front and the rear of the vehicle by transversely extending tubular section members, each longitudinal member being connected to at least one of the      transverse members and to one of the inlet and outlet of means for producing a flow of hydraulic fluid under pressure.

Preferably the tubular section member providing the hydraulic fluid reservoir forms a rollover protection bar.

One embodiment of the present invention is described in detail below with reference to the accompanying drawings.

In the drawings:

Figure 1 is a plan view of the main components of a chassis of an embodiment of a vehicle according to the present invention;

Figure 2 is an elevation of the chassis of the vehicle of Figure 1;

Figure 3 is a diagrammatic view of the hydraulic distribution circuit of the vehicle of Figure 1;

Figure 4 is an elevational view of an embodiment of means for coupling an implement to the front end of a vehicle;

Figure 5 is an elevational view of the implement and coupling means shown in Figure 4;

Figure 6 is a plan view of the attachment of Figure 5;

Figure 7 is a diagrammatic view of the hydraulic control circuit of the coupling means of Figure 4;

Figure 8 is an elevational view of another embodiment of means for coupling an implement to the front end of a vehicle; and

Figure 9 is a diagrammatic view of the hydraulic control circuit of the coupling means of Figure 8.

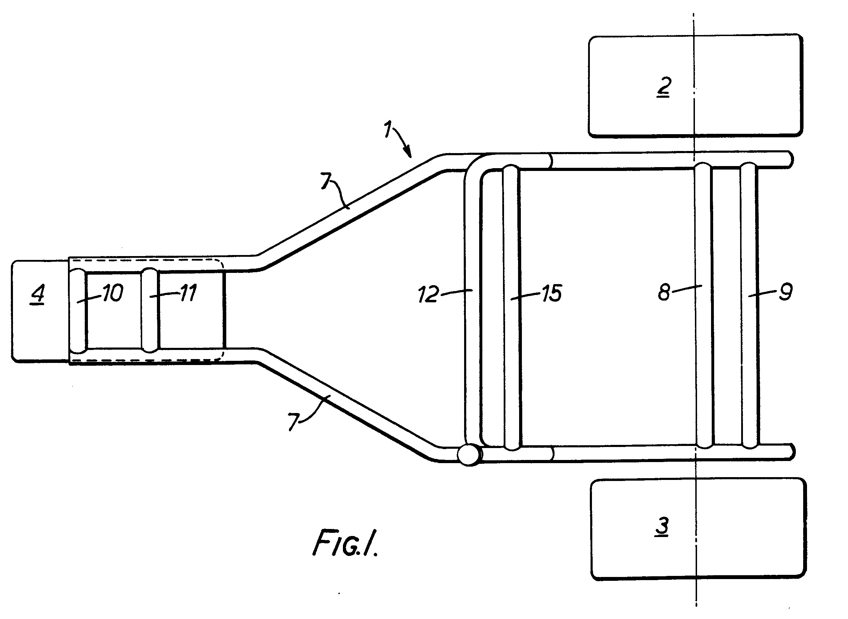

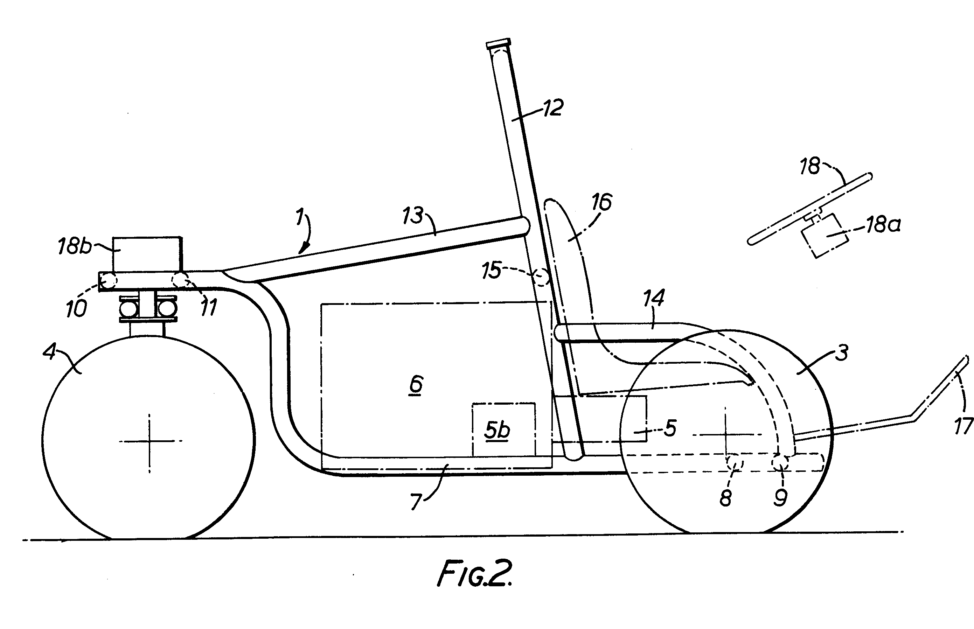

The vehicle shown in Figures 1 to 3 of the drawings, in this embodiment a tractor, comprises a chassis 1 on which are mounted in a conventional manner three wheels 2, 3, 4, being two front wheels 2, 3 and a rear wheel 4, each provided with a hydraulic motor 2a, 3a and 4a, driven by a central pump 5 in turn driven by an engine 6, the pump 5 and engine 6 being mounted on the chassis as is conventional.

The chassis comprises a pair of longitudinally extending members 7 which are mechanically connected adjacent each end of the chassis to a pair of transverse members 8, 9 and 10, 11. The chassis also comprises a U-shaped rollover protection bar 12 together with other members to strengthen the chassis, such as members 13 extending rearwardly from the bar 12 to the members 7, members 14 extending forwardly from the rollover bar to the members 7 and member 15 interconnecting the two arms of the bar 12 intermediate its ends.

The above members of the chassis are all made of tubular section, e.g. round or rectangular section, metal tubing which is capable of withstanding the pressure of the hydraulic fluid which is required to drive the wheel motors, e.g. $2 \times 10^7$ N/m$^2$ (3,000 lbf/in$^2$), and are internally interconnected to provide the hydraulic distribution circuit and reservoir. To this end, each member 7 is internally connected to one of the transverse members, e.g. 8 and 9 or 8 and 10, and may, as shown, be connected internally to one of each pair of members, e.g. 8 and 10 and 9 and 11, and the input and output of the pump 5 are connected to

respective members 7.  The rollover protection bar 12 is connected to the circuit as the reservoir and the volume for the reservoir can be increased by internally connecting members 15, 13 and 14 to the bar 12.

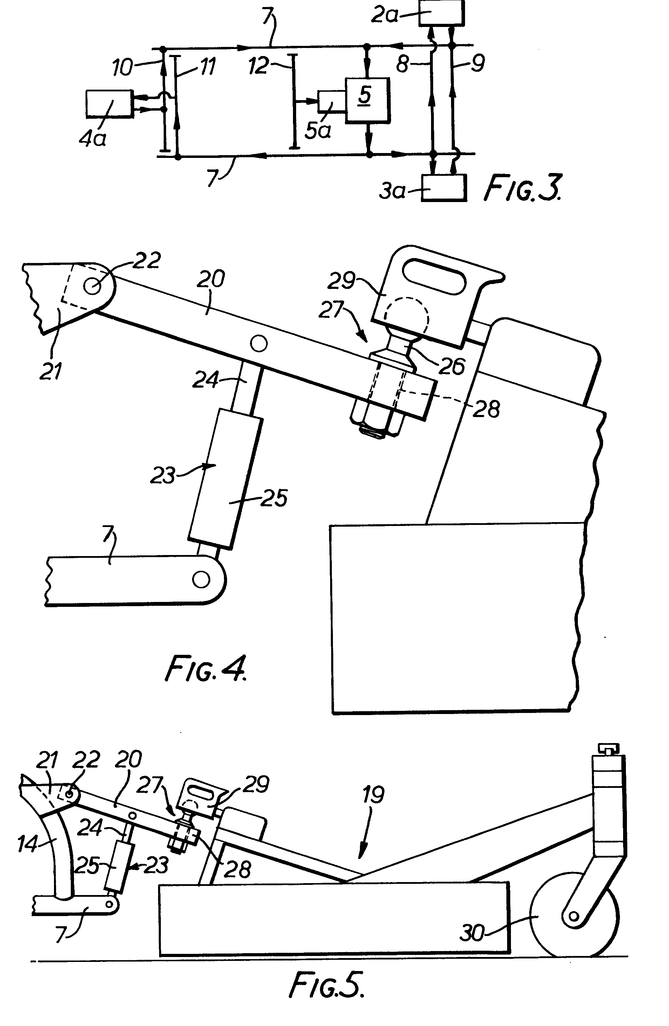

In the particular embodiment, the pump 5 is a variable displacement piston pump which is driven by an internal combustion engine 6, the wheel motors being positive displacement hydrostatic motors.  The leakage outlet of the pump 5 is connected to one end of the bar 12 and the inlet of the precharge pump 5a associated with pump 5 is connected to the other end of the bar 12. Similarly the leakage outlets of the motors of the wheels are also connected to the one end of the bar 12.  The leakage connections to the bar 12 have not been shown for simplicity in Figure 3.

In operation, with the pump set to produce a required flow of fluid under pressure to the wheel motors, the fluid flows along one of the two members 7 to the connected members 8 and 10 or 9 and 11 and from thence to the wheel motors.  Fluid returns along the other transverse  members and the other member 7 to the pump.

It has been found that with the above described distribution circuit, no additional cooling facility is required for cooling the hydraulic fluid from the wheel motors and it is assumed that this heat is dissipated sufficiently through the chassis members.

The chassis 1 additionally supports a casing (not shown) housing the chassis, a seat 16 for the driver of the vehicle, a platform 17 for the driver's feet, a steering wheel 18 and the controls necessary for controlling the pump and motor and steering the vehicle. As shown the rear wheel 4 of the vehicle is steered and is mounted for this purpose in a conventional manner. Preferably steering is effected hydraulically by power taken off from a power take off pump 5b driven by the engine 6, a transmitter 18a being associated with the steering wheel 18 and hydraulically coupled to a receiver 18b associated with the rear wheel 4. Advantageously the rear wheel 4 is mounted for rotation through 90° in each direction to minimise the turning circle of the vehicle.

It will be appreciated that, in the vehicle illustrated, only one or two of the wheels may be driven and provided with hydraulic motors, for example both front wheels or one front wheel and one rear wheel, and that the invention is equally applicable to vehicles with more than three wheels and to vehicles which are supported on endless tracks where the rollers driving the tracks can be equated with the ground engaging wheels of the embodiment described above.

In a preferred embodiment the members 7 to 10 are made of circular section 50.8 mm (2 inch) OD cold drawn seamless hydraulic tubing and the bar 12 with member 15 is made of square section tubing to increase the volume of the hydraulic fluid reservoir which may, for example, be 11.4 litres (2.5 gallons).

There is thus provided a vehicle having a very simple construction by virtue of the fact that the load bearing chassis also serves as the hydraulic fluid distribution circuit and the hydraulic fluid reservoir.

The above described tractor can be adapted to pull an implement or load, as is conventional, and may be adapted to drive an implement 19 which is coupled to the front of the tractor. To this end, as shown in Figures 4 to 7 a pair of members 20 are provided at the front of the tractor each mounted on a flange 21, fixed to the chassis, for pivotal movement about a horizontal axis 22 perpendicular to the longitudinal axis of the vehicle. The angular position of each member 20 is controlled by a double acting hydraulic ram 23 of which the rod 24 is pivotally connected to the member 20 intermediate the ends thereof and the cylinder 25 is pivotally connected to the end of a member 7. The free end of each member 20 is provided with part 26 of coupling means 27 which provides limited universal movement. As shown the coupling means 27 is a conventional ball and socket joint with quick release means, of which the ball is mounted on the end of member 20. The ball 26 is mounted in a resilient bearing 28 to permit the ball to flex.

The implement carries the sockets 29 of the coupling means 27 which are rigidly fixed thereto. In addition the implement has one or, as shown, a pair of ground engaging castoring wheels 30 at or adjacent the front end and mounted on the implement to be adjustable in height relative thereto and to be pivotable about a vertical axis.

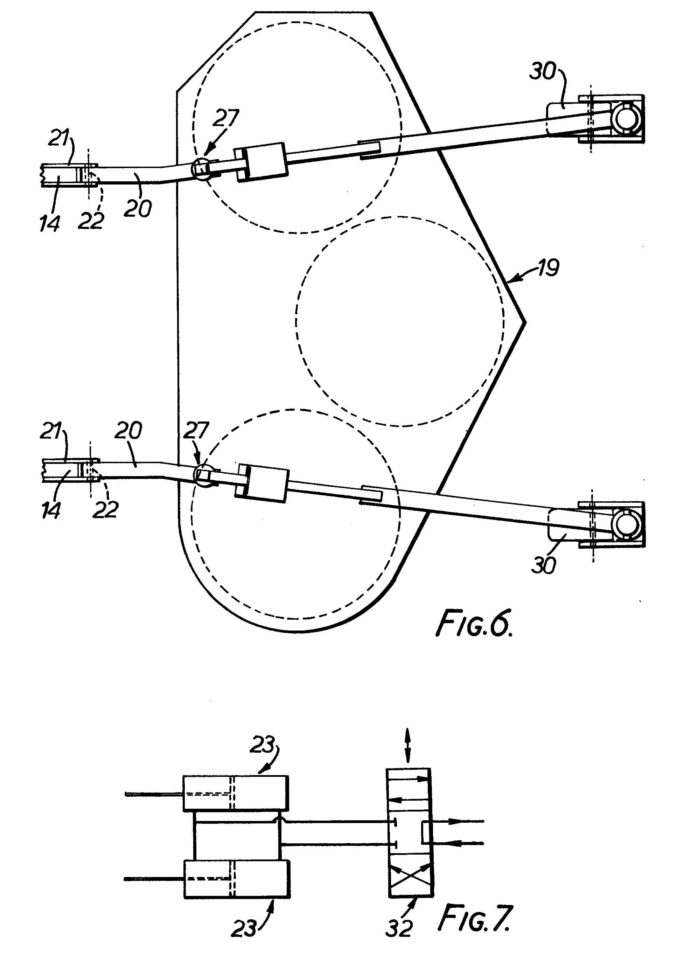

The implement may, if required, be hydraulically powered by an hydraulic take off from the pump 5b, the hydraulic circuit for the implement including heat exchange means for cooling the fluid, and the rams 23 are connectable to a source of fluid under pressure which may also be taken from the pump 5b. As shown in Figure 7, the rams 23 are connected to a three position valve 32 such that, in a central position of the valve 32, the chambers above and below the piston are connected directly together. In the end positions of the valve, the chambers of the rams 23 are connected to a supply of fluid under pressure and exhaust.

In operation of the above described arrangement, when it is required to use the implement, the ground engaging wheels 30 are adjusted to provide the correct clearance between the implement and the ground at the front of the implement and the rams 23 are adjusted to provide the correct clearance at the rear of the implement. Having established the correct clearance, the valve 32 is moved to its central position for use of the implement. By virtue of the universal coupling means 27, the implement can pivot relative to the vehicle about a horizontal axis perpendicular to the longitudinal axis of the vehicle to accommodate uneven ground and, because of these coupling means 27 and the interconnection of the rams 23, the implement can tilt about the longitudinal axis of the vehicle, the resilient bearings 28 of balls 26 permitting this tilting movement. However the implement cannot pivot about a vertical axis.

At the end of an operation, when it is required to lift the implement clear of the ground, it is merely a matter of moving the valve 32 to energise both rams 23 to pivot the members 20 upwardly. Initially the implement tilts towards the ground about the universal coupling means 27 but this is limited by abutment between the parts of the coupling means and then the implement is lifted by the upwards pivotal movement of the members 20.

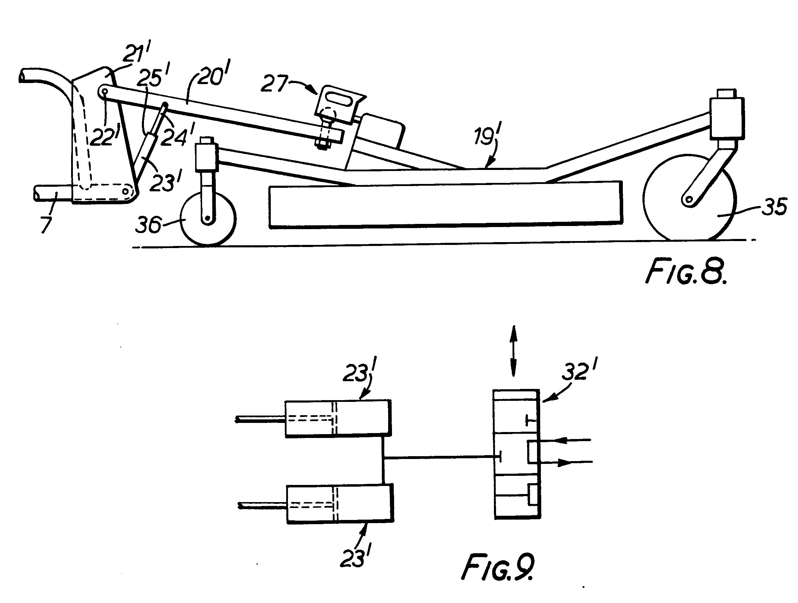

Alternatively as shown in Figure 8, the implement 19' to be driven by the tractor may be provided with two pairs of ground engaging wheels 35, 36, one pair of wheels 35 being arranged adjacent the front end of the implement and the other pair of wheels 36 being arranged adjacent the rear end of the implement. Both pairs of wheels may be adjustable in height relative to the implement to provide the required clearance between the implement and the ground and the leading wheels 35 are castoring wheels rotatable about vertical axes.

The implement is connected to the tractor in a manner similar to that connection of implement 19 to the tractor and like parts have been designated by the same reference numerals but with a prime.  However, because the implement is self-supporting on the ground the rams 23' are single acting and the valve 32' (Figure 9) has a central position in which the chambers of the jacks 23' are connected together and which is assumed when the implement is in use, and two end positions in which the chambers of the jacks 23' are connected to fluid under pressure and exhaust respectively for lifting and lowering the arms 20' and the implement 19'.

There is thus provided means for attachment of an implement to a vehicle which is constructionally simple and easy to operate, having in its first embodiment/merely one control for adjusting ground clearance and movement of the implement between its operative and inoperative positions.

The implement may, for example, be a cutter with three pairs of horizontally rotating blades as shown, a spraying apparatus, or any other of the implements conventionally attached to the front of a tractor.

CLAIMS

1.         A vehicle comprising a chassis (1) supported on at least three rotatable support members (2, 3, 4), hydraulic drive means (2a, 3a, 4a) for hydraulically driving at least one of said support members, and means (5, 6) for producing a flow of hydraulic fluid under pressure, characterised in that the chassis (1) comprises tubular section members (7-11) which are internally connected together to serve for the distribution of hydraulic fluid between the or each hydraulic drive means and the means (5, 6) for producing a flow of hydraulic fluid under pressure.

2.         A vehicle as claimed in claim 1, characterised in that the chassis (1) comprises a pair of longitudinally extending tubular section members (7) connected adjacent the front and the rear of the vehicle by transversely extending tubular section members (8, 9 and 10, 11), each longitudinal member (7) being internally connected to at least one of     the         transverse members (8-11) and to one of the inlet and outlet of the means (5, 6) for producing a flow of hydraulic fluid under pressure.

3.         A vehicle as claimed in claim 2, characterised in that the hydraulic drive means (2a, 3a, 4a) associated with the or each hydraulically driven rotatable support member (2, 3, 4) is hydraulically connected to each longitudinal member (7).

4.         A vehicle as claimed in any one of the preceding claims, characterised in that the chassis (1) includes a tubular section member (12) which is connected as a hydraulic fluid reservoir.

5.    A vehicle comprising a chassis (1) supported
on at least three rotatable support members (2, 3, 4),
hydraulic drive means (2a, 3a, 4a) for hydraulically
driving at least one of the support members (2, 3, 4),
and means (5, 6) for producing a flow of hydraulic fluid
under pressure, characterised in that the chassis (1)
comprises at least one tubular section member (12)
which is internally connected to form a reservoir for
hydraulic fluid.

6.    A vehicle as claimed in either claim 4 or
claim 5, characterised in that the tubular section
member forms a rollover protection bar (12).

7.    A vehicle as claimed in any of the preceding
claims, characterised in that the rotatable support
members (2, 3, 4) are wheels.

8.    A vehicle as claimed in any one of claims 1 to
6, characterised in that the rotatable support members
are arranged to drive endless belts by which the vehicle
bears on the ground.

9.    A vehicle as claimed in any one of the
preceding claims, characterised in that all the support
members (2, 3, 4) are hydraulically driven.

10.    A vehicle as claimed in any one of the preceding
claims including means at the front end thereof for
attachment of an implement to be driven thereby,
characterised in that the means comprise a pair of
spaced apart members (20 or 20') mounted on the chassis
for pivotal movement about a horizontal axis perpendicular
to the longitudinal axis of the vehicle, each member
(20 or 20') carrying coupling means (27 or 27') for coupling to an implement (19 or 19'), the coupling means (27 or 27') permitting limited universal movement relative thereto, and means (23 or 23') for controlling the angular positions of the members (20 or 20') about the horizontal axis.

11.     A vehicle as claimed in claim 10, characterised in that the means (23 or 23') for controlling the angular positions of the members (20 or 20') comprise cylinder and piston means in respect of each member and selectively connectable to a source of fluid under pressure and to each other.

12.     A vehicle as claimed in either claim 10 or claim 11, characterised in that each coupling means (27 or 27') comprises part of a ball and socket joint.

13.     A vehicle as claimed in any one of claims 10 to 12, including an implement (19) detachably connected to the coupling means (27 or 27'), characterised in that the implement (19 or 19') comprises at least one ground engaging member  (30 or 35).

14.     A vehicle as claimed in claim 13, characterised in that the coupling means (27, 27') comprise ball and socket joints of which the balls (26 or 26') are mounted on the members (20 or 20') and the sockets (29 or 29') are fixed to the implement (19 or 19').

15.     A vehicle as claimed in either claim 13 or claim 14, characterised in that the means (23 or 23') for controlling the angular positions of the members (20, 20') about the horizontal axis comprise cylinder and piston means connectable to a source of fluid under pressure for moving the implement between operative and inoperative positions and connectable together to permit the implement (19 or 19') to tilt about the longitudinal axis of the vehicle.

Fig.I.

0006302

Fig.2.

0006302

FIG.3.

FIG.4.

FIG.5.

FIG.6.

FIG.7.

FIG.8.

FIG.9.

0006302

## DOCUMENTS CONSIDERED TO BE RELEVANT

| Category | Citation of document with indication, where appropriate, of relevant passages | Relevant to claim |
|---|---|---|
| | DE - A - 2 035 805 (KLÖCKNER-HUMBOLDT-DEUTZ A.G.)<br>* from page 6, line 3 to page 9;fig. *<br>--- | 1-7, 10 |
| | US - A - 2 228 411 (L.M. SHERIDAN)<br>* page 1, right hand column, lines 5 to 51; fig. 1 *<br>--- | 1-3, 7,9 |
| | GB - A - 1 258 927 (THE BRITISH MOTOR CORPORATION LTD.)<br>* page 1, lines 30 to 45; fig. 1 *<br>--- | 1-3, 7,9 |
| | GB - A - 1 255 094 (THE BRITISH MOTOR CORPORATION LTD.)<br>* page 1, lines 15 to 63; fig. 4 *<br>--- | 1-3, 7,9 |
| | US - A - 3 690 398 (G.K. HAUSE)<br>* claims; fig. 2 *<br>--- | 1-3, 7 |
| A | FR - A - 2 178 669 (RANSOMES SIMS & JEFFERIES LTD.)<br>* page 1, lines 1 to 25 *<br>--- | |
| A | US - A - 4 063 608 (P.D. SULLIVAN)<br>* abstract; fig. *<br>---- | |

**CLASSIFICATION OF THE APPLICATION (Int. Cl.²)**

B 60 K 17/10
B 62 D 21/00

**TECHNICAL FIELDS SEARCHED (Int.Cl.²)**

B 60 K 17/00
B 62 D 21/00
B 62 D 49/00

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

| X | The present search report has been drawn up for all claims |
|---|---|

| Place of search | Date of completion of the search | Examiner |
|---|---|---|
| Berlin | 08-08-1979 | LEITZ |

EPO Form 1503.1 06.78